Europäisches Patentamt

European Patent Office

Office européen des brevets

(19)

(11) Numéro de publication : **0 242 377 B1**

# FASCICULE DE BREVET EUROPÉEN

(12)

(45) Date de publication du fascicule du brevet :
15.03.89

(21) Numéro de dépôt : 86905849.5

(22) Date de dépôt : 29.09.86

(86) Numéro de dépôt international :
PCT/FR 86/00333

(87) Numéro de publication internationale :
WO/8702348 (23.04.87 Gazette 87/09)

(51) Int. Cl.⁴ : **C 02 F 1/44**, B 01 D 13/00//
**B63J1/00**

(54) **DISPOSITIF DE PRODUCTION D'EAU DOUCE A PARTIR D'EAU DE MER PAR OSMOSE INVERSE.**

(30) Priorité : 10.10.85 FR 8515532

(43) Date de publication de la demande :
28.10.87 Bulletin 87/44

(45) Mention de la délivrance du brevet :
15.03.89 Bulletin 89/11

(84) Etats contractants désignés :
DE GB IT NL SE

(56) Documents cités :
EP--A-- 0 062 944

(73) Titulaire : **Lopez, Fernand**
**27, Rue Emile Barrière**
**F-31200 Toulouse (FR)**

(72) Inventeur : **Lopez, Fernand**
**27, Rue Emile Barrière**
**F-31200 Toulouse (FR)**

(74) Mandataire : **Barre, Philippe**
**Cabinet Barre-Gatti-Laforgue 95 rue des Amidonniers**
**F-31069 Toulouse Cedex (FR)**

EP 0 242 377 B1

Jouve, 18, rue St-Denis, 75001 Paris, France

## Description

L'invention concerne un dispositif de production d'eau douce à partir d'eau de mer, par filtration à travers une ou des membranes semi-perméables sélectives d'osmose inverse. Ce dispositif peut en particulier être appliqué pour réaliser un appareil de survie apte à délivrer de l'eau douce à des naufragés, mais également pour approvisionner un bateau en eau douce ou encore pour produire industriellement de l'eau douce à partir d'une plateforme côtière.

Le brevet FR 81.07185 (EP-A 62944) au nom du demandeur, décrit un dispositif de ce type ; immergé dans le milieu marin à une profondeur modérée (en particulier de l'ordre de 15 à 35 mètres), ce dispositif conditionne au niveau de la membrane semi-perméable une pression élevée (par exemple de l'ordre de 50 bars) appropriée pour assurer le déroulement du processus d'osmose inverse.

La présente invention se propose de fournir un dispositif perfectionné fonctionnant selon le même principe que le dispositif ci-dessus évoqué.

Un premier objectif de l'invention est de simplifier la structure du dispositif et d'en réduire les coûts de fabrication et encombrement. En particulier, l'invention vise un dispositif particulièrement bien adapté pour réaliser des appareils de survie de petite taille.

Un autre objectif est d'accroître notablement la fiabilité de fonctionnement du dispositif et sa durée de vie.

Un autre objectif est de fournir un dispositif dans lequel la filtration osmotique garde une efficacité constante au cours du processus de production d'eau douce (vitesse de filtration constante pendant toute la filtration).

Le dispositif visé par l'invention est destiné à être immergé au cœur du milieu marin et comprend :

— des moyens de recueil de l'eau douce produite,

— une chambre, dite chambre haute pression, agencée pour contenir de l'eau de mer en vue de son traitement,

— au moins une membrane semi-perméable sélective adaptée pour réaliser une filtration par osmose inverse de l'eau de mer contenue dans la chambre haute pression, ladite membrane étant agencée de sorte qu'une de ses faces actives, dite face active amont, communique avec ladite chambre haute pression et que son autre face active, dite face active aval, communique avec les moyens de recueil d'eau douce,

— une cloche mobile par rapport à la chambre haute pression, comprenant :

• d'une part, une paroi périphérique adaptée pour pouvoir se déplacer de façon étanche le long de la chambre haute pression,

• d'autre part, un piston interne de surface utile (s) apte à pénétrer sur une profondeur variable dans la chambre haute pression à travers une paroi de séparation située entre ladite chambre et ladite cloche,

• enfin, une paroi d'obturation, de surface utile (S) située à l'opposé de la surface utile (s) du piston et soumise à la pression du milieu extérieur, ladite surface utile (S) de la paroi d'obturation étant supérieure à ladite surface utile (s) du piston,

— une chambre sous atmosphère gazeuse située dans le volume intérieur de la cloche autour du piston interne de celle-ci.

Selon une caractéristique de la présente invention, la paroi de séparation de la chambre haute pression comprend des moyens de communication reliés à la membrane semi-perméable et adaptés pour amener la face active aval de ladite membrane à communiquer avec le volume intérieur de la cloche de sorte que ledit volume intérieur remplisse le double rôle de chambre sous atmosphère gazeuse et de moyens de recueil d'eau douce, la cloche étant dotée de moyens de retrait de l'eau douce contenue dans son volume intérieur.

Ainsi, dans le dispositif perfectionné conforme à l'invention, l'étage de réception d'eau douce se trouve confondu avec la chambre sous atmosphère gazeuse et, comme on le comprendra mieux plus loin, cet agencement permet une simplification notable de l'appareil et une réduction de son encombrement à performances égales.

Les moyens de retrait de l'eau douce peuvent très simplement être constitués par un bouchon amovible étanchement vissé sur la cloche de façon à autoriser le retrait de l'eau contenue dans celle-ci.

De plus, un tube souplé de purge d'air est avantageusement relié à la cloche pour mettre la chambre sous atmosphère gazeuse en communication avec la surface. Ainsi cette chambre qui joue également le rôle de récepteur d'eau douce, se trouve à pression constante quelle que soit la position de la cloche et quel que soit le volume d'eau douce déjà filtré ; à une profondeur donnée, la pression de travail de la membrane osmotique (différence de pression entre sa face active amont située dans la chambre haute pression et sa face active aval en communication avec la chambre sous atmosphère gazeuse) demeure constante, de sorte que la vitesse de filtration ne subit aucune diminution au cours de la filtration. Dans le cas d'un appareil de survie, le tube souple précité est de préférence prévu de résistance adaptée pour faire office de moyens de descente ou de remontée du dispositif dans le milieu marin.

Au cours du processus de filtration, la cloche se déplace par rapport à la chambre haute pression sous l'effet de la pression extérieure, entre une position extrême dite d'extraction et une position extrême dite de pénétration. Selon une autre caractéristique de l'invention, le réarmement du dispositif est effectué en surface manuellement par l'opérateur, grâce à deux poignées

externes de manœuvre, disposées l'une d'un côté sur une paroi de la cloche, et l'autre du côté opposé sur une paroi de la chambre haute pression. Après recueil de l'eau, l'opérateur exerce une traction sur ces poignées de façon à revenir de la position extrême de pénétration à la position extrême d'extraction. On supprime ainsi tout accessoire de rappel pour réaliser cette opération.

Par ailleurs, la membrane semi-perméable d'osmose inverse de tout type connu. En particulier, cette membrane peut être une membrane tubulaire de type connu en soi (en acétate de cellulose, polyamide aromatique ou autre), enroulée en spires dans la chambre haute pression ; la face active amont de cette membrane est constituée par la face externe du tube qui la forme, et baigne dans l'eau de mer contenue dans la chambre haute pression, cependant que la face active aval est constituée par la face interne de la membrane et est en communication avec la chambre sous atmosphère gazeuse pour assurer l'écoulement de l'eau douce filtrée vers celle-ci ; les moyens de communication comprennent en particulier un embout tubulaire disposé dans un canal qui traverse la paroi de séparation située entre la chambre haute pression et la chambre sous atmosphère gazeuse ; cet embout est adapté pour maintenir une extrémité de la membrane tubulaire de façon que sa face active aval (face interne) communique directement et de façon étanche avec la chambre sous atmosphère gazeuse. L'autre extrémité de la membrane semi-perméable peut être obturée de sorte que l'écoulement d'eau douce s'effectue à travers une seule extrémité ; cette autre extrémité peut également être fixée sur un autre embout, de la même façon que la première, pour autoriser un écoulement d'eau filtrée à travers les deux extrémités.

En outre, selon une autre caractéristique de l'invention, le piston interne peut être percé intérieurement d'un canal d'admission d'eau salée, ledit canal débouchant, à une extrémité, dans la chambre haute pression et, à l'extrémité opposée, à l'extérieur de la paroi d'obturation de la cloche, un bouchon amovible étant étanchement monté à cette dernière extrémité en vue d'autoriser le remplissage de la chambre haute pression ; cette disposition permet d'alléger l'appareil.

Dans une autre version, le piston interne peut être plein, un orifice de remplissage doté d'un bouchon amovible étant prévu dans le fond de la chambre haute pression en vue d'autoriser le remplissage de cette dernière.

D'autres caractéristiques, buts et avantages de l'invention se dégageront de la description qui suit en référence aux dessins annexés qui présentent à titre d'exemple non limitatif un mode de réalisation d'un appareil de survie conforme à la présente invention : sur ces dessins qui font partie intégrante de la présente description :

— la figure 1 est une vue en coupe axiale de cet appareil dans la position extrême de pénétration, sensiblement à échelle 1,

— la figure 2 en est une coupe de détail,

— la figure 3 en est une coupe axiale à échelle réduite dans la position extrême d'extraction.

L'appareil de survie représenté à titre d'exemple aux figures est destiné à équiper des embarcations de secours pour permettre à un ou des naufragés de fabriquer de l'eau douce à partir d'eau de mer, même en eaux peu profondes, au terme d'opérations faciles à exécuter.

Ce dispositif comprend essentiellement deux ensembles mobiles l'un par rapport à l'autre.

Le premier ensemble délimite une chambre 1, dite chambre haute pression, et est constitué par un corps cylindrique 2 qui porte à une extrémité une paroi 3 dite paroi de séparation, d'un seul tenant avec le corps 2. A l'autre extrémité, le corps 2 porte une paroi circulaire rapportée 4 qui est bloquée contre un épaulement 2a par un clips 5.

Un joint torique d'étanchéité 6 assure l'étanchéité autour de la paroi 4. En outre, une poignée externe 7 est fixée sur cette paroi 4 en vue de permettre les manœuvres de l'appareil.

La paroi de séparation 3 est percée d'une cheminée cylindrique axiale dotée d'un évidement 3a à sa base et d'une gorge dans laquelle est logé un joint torique d'étanchéité 8.

De plus, ladite paroi de séparation 3 délimite du côté opposé à la chambre haute pression 1 un compartiment annulaire 9 destiné à recevoir l'eau douce produite.

Par ailleurs, la chambre haute pression 1 contient une bobine cylindrique ajourée 10 qui s'étend entre ses parois 3 et 4 autour du volume axial situé à l'aplomb de la cheminée précitée. Cette bobine porte un cordonnet tubulaire 11 qui est enroulé en spires autour de celle-ci et est constitué par une membrane semi-perméable tubulaire d'osmose inverse de type connu, par exemple en acétate de cellulose.

Comme le montre la figure de détail 2, une extrémité 11a de la membrane tubulaire pénètre dans un embout tubulaire rigide 12 dont l'alésage correspond au diamètre externe de ladite membrane. Cet embout est emmanché et collé dans un canal 3b dont est percée la paroi de séparation 3, jusqu'à venir en butée contre un épaulement de ce canal ; le canal 3b débouche au fond du compartiment annulaire 9 évoqué précédemment.

Un manchon en latex 13 est engagé sur la partie débordante de l'embout 12 et sur la membrane tubulaire 11, afin d'assurer l'étanchéité. Il est à noter que ce montage garantit une excellente étanchéité qui croît avec la pression régnant dans la chambre haute pression 1.

L'autre extrémité de la membrane semi-perméable 11 peut être obturée ; il est également possible de connecter cette autre extrémité à un autre embout agencé comme le premier en vue d'assurer un écoulement dans les deux sens. Ce dernier montage s'avère souhaitable dans le cas où la longueur du cordonnet formant la membrane dépasse 30 mètres, afin de réduire les pertes de charge (il est à noter que celles-ci demeurent très faibles en raison du faible débit d'écoulement).

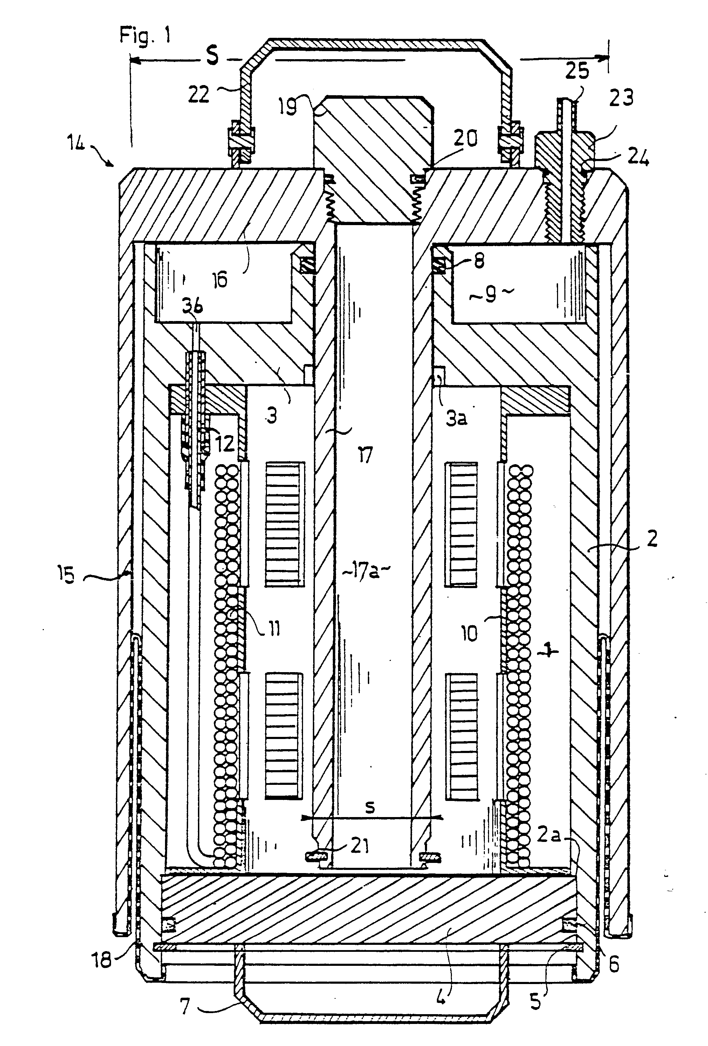

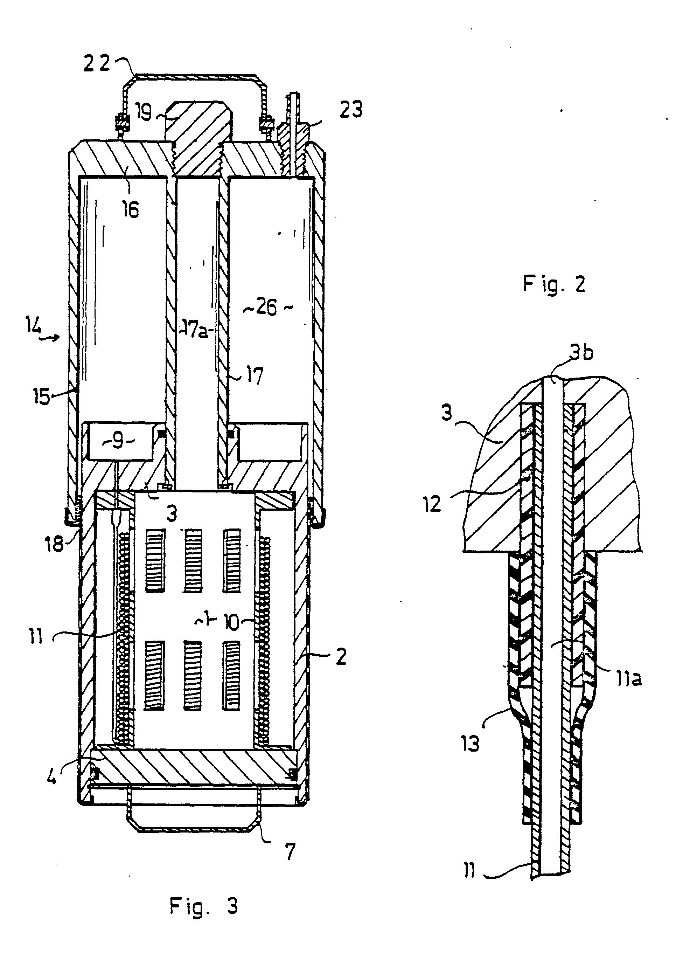

Par ailleurs, le deuxième ensemble de l'appareil comprend une cloche 14 agencée pour pouvoir se déplacer axialement le long du premier ensemble entre une position extrême dite de pénétration (figure 1) et une position extrême opposée dite d'extraction (figure 3).

La cloche 14 délimite avec la paroi de séparation 3 une chambre 26 dite chambre sous atmosphère gazeuse, de volume variable ; cette cloche est composée d'une paroi périphérique 15, d'une paroi dite d'obturation 16 et d'un piston interne 17.

La paroi périphérique 15 entoure le corps 2 de la chambre haute pression 1 et est associée à une membrane d'étanchéité 18 dont une bordure est fixée sur ladite paroi périphérique et l'autre bordure est fixée sur le corps cylindrique 2. Cette membrane qui se déroule au fur et à mesure du coulissement de la cloche peut en particulier être constituée par une membrane en élastomère toilé du type « Bellofram » fabriqué par la Société « Le Joint Français ».

La paroi d'obturation 16 possède une surface utile (S) de l'ordre de 50 à 120 cm$^2$ pour un appareil de survie. (Par « surface utile », on entend la surface de ladite paroi sur laquelle s'applique la pression extérieure sans contre-pression égale opposée.)

Le piston interne 17 est agencé de façon à pouvoir coulisser axialement dans la cheminée de la paroi de séparation 3, l'étanchéité étant assurée par le joint 8.

En l'exemple, ce piston est intérieurement percé d'un canal 17a d'admission d'eau salée, qui débouche, à une extrémité, dans la chambre haute pression 1 et, à l'extrémité opposée, à l'extérieur de la paroi d'obturation 16. A cette extrémité, le canal est doté d'un taraudage qui permet d'y visser un bouchon amovible 19 associé à un joint torique d'étanchéité 20.

Le piston 17 possède une surface utile (s) (sur laquelle s'applique la pression régnant dans la chambre haute pression) dont la valeur est très inférieure à la surface (S) précitée ; par exemple la surface (s) peut être de l'ordre de 3 à 5 cm$^2$.

Le piston 17 est équipé à son extrémité libre d'un clips 21 qui, dans la position extrême d'extraction, vient en butée contre la paroi de séparation 3 dans l'évidement 3a (côté chambre haute pression 1) ; dans la position extrême de pénétration, la paroi d'obturation 16 de la cloche vient en butée en bordure du compartiment annulaire 9.

De plus, la paroi d'obturation 16 de la cloche porte une poignée de manœuvre 22, articulée sur deux pattes fixées à l'extérieur de cette paroi, en vue de permettre la manœuvre de l'appareil.

En outre, un bouchon amovible 23 est vissé sur cette paroi 16 avec interposition d'un joint torique d'étanchéité 24 ; ce bouchon autorise le retrait de l'eau douce contenue dans le compartiment annulaire 9 après filtration.

Par ailleurs, un tube souple de purge d'air 25 est relié à la cloche 14 de façon à mettre la chambre sous atmosphère gazeuse 26 en communication avec la surface. Ce tube est en l'exemple fixé par son extrémité sur le bouchon 23 qui est percé d'un canal prolongeant l'âme creuse dudit tube.

Le tube 25 peut avoir une longueur de l'ordre de 25 à 30 mètres ; il est réalisé en un matériau de résistance appropriée pour permettre de soutenir l'appareil afin de le descendre et de le remonter dans le milieu marin. Par exemple, le tube 25 peut être constitué par un tube souple en matériau synthétique armé.

On conçoit la simplicité structurelle du dispositif dont les coûts de fabrication et de montage sont notablement réduits par rapport au dispositif antérieur précédemment évoqué. Son fonctionnement dont le principe général est le même que celui de ce dispositif antérieur, est décrit ci-après.

L'utilisateur dispose le dispositif dans sa position extrême d'extraction (figure 3), en exerçant une traction sur les poignées 7 et 22, le bouchon 19 étant retiré. Ensuite, à travers le canal 17a du piston, il remplit la chambre haute pression 1 d'eau de mer jusqu'au col supérieur dudit canal 17a, et remet en place le bouchon 19.

Il est à noter que, dans une autre version du dispositif, le piston 17 pourrait être plein, le remplissage s'effectuant au moyen d'un bouchon prévu dans la paroi opposée 4. Le tube souple 25 peut alors être relié au centre de la paroi 16 au droit du piston avec un perçage ménagé dans ce dernier pour déboucher dans la chambre 26.

L'utilisateur immerge ensuite le dispositif en maintenant le tube souple 25 qui sert de moyen de retenue ; ce tube peut être enroulé autour d'une bobine rotative pour faciliter cette opération. La hauteur d'immersion peut être de l'ordre de 20 à 25 mètres. A cette profondeur, la pression relative extérieure d'environ 2 à 2,5 bars s'applique sur la surface (S) de la cloche et repousse celle-ci vers la chambre haute pression : l'eau de cette chambre est soumise par l'entremise de la surface (s) du piston à une pression d'environ 50 bars (facteur multiplicateur de la pression extérieure égal à S/s). Cette pression de l'ordre du double de la pression osmotique d'une eau de mer de salinité moyenne assure le déroulement du phénomène d'osmose inverse à travers la membrane 11. L'eau douce produite s'écoule dans le compartiment 9 de la chambre sous atmosphère gazeuse 26. Au fur et à mesure de la filtration, la cloche 14 est repoussée vers la chambre haute pression 1 et le piston 17 pénètre dans celle-ci.

La chambre sous atmosphère gazeuse 26 se trouvant à la pression de la surface, et aucun moyen de rappel n'étant prévu entre les deux ensembles mobiles, la contre pression absolue demeure égale à environ 1 bar et ne subit aucune augmentation au cours de la pénétration du piston (que ce soit en raison du volume d'eau douce parvenu dans la chambre 26, ou de la réduction du volume de celle-ci ou encore de la compression d'un moyen de rappel) ; ainsi la filtration par osmose inverse s'effectue avec une vitesse à peu près constante jusqu'à ce que le piston ait entièrement pénétré dans la chambre haute pression (position extrême de pénétration : figure 1). Un volume d'eau douce égal au volume d'eau déplacé par le piston dans la chambre haute pression a alors été filtré et s'est écoulé vers le compartiment 9.

L'opérateur remonte alors le dispositif et en retire l'eau douce au moyen du bouchon 23.

Le dispositif peut être réutilisé comme précédemment en le réarmant au moyen des poignées 7 et 22 après retrait du bouchon 19. Il est à noter qu'il est souhaitable de vidanger à chaque opération la chambre haute pression 1 afin d'éviter une augmentation de la salinité de l'eau contenue dans celle-ci.

La membrane d'étanchéité 18 du type « Bellofram » disposée entre les deux ensembles mobiles, autorise le déplacement de ces deux ensembles avec des frottements réduits. De plus, elle isole totalement l'eau salée environnante et l'eau douce obtenue, en évitant que les faces en regard de la paroi cylindrique 15 et du corps 2 soient mouillées par l'eau de mer. Un autre avantage de ce type de membrane réside dans les larges tolérances d'usinage qu'elle permet pour les parois en regard.

**Revendications**

1. Dispositif de production d'eau douce à partir d'eau de mer, appelé à être immergé au cœur du milieu marin, du type comprenant :

— des moyens de recueil de l'eau douce produite (9),

— une chambre (1), dite chambre haute pression, agencée pour contenir de l'eau de mer en vue de son traitement,

— au moins une membrane semi-perméable sélective (11) adaptée pour réaliser une filtration par osmose inverse de l'eau de mer contenue dans la chambre haute pression, ladite membrane étant agencée de sorte qu'une de ses faces actives, dite face active amont, communique avec ladite chambre haute pression et que son autre face active, dite face active aval, communique avec les moyens de recueil d'eau douce,

— une cloche (14) mobile par rapport à la chambre haute pression, comprenant :

• d'une part, une paroi périphérique (15) adaptée pour pouvoir se déplacer de façon étanche le long de la chambre haute pression,

• d'autre part, un piston interne (17) de surface utile (s) apte à pénétrer sur une profondeur variable dans la chambre haute pression à travers une paroi de séparation (3) située entre ladite chambre et ladite cloche,

• enfin, une paroi d'obturation (16), de surface utile (S) située à l'opposé de la surface utile (s) du piston et soumise à la pression du milieu extérieur, ladite surface utile (S) de la paroi d'obturation étant supérieure à ladite surface utile (s) du piston,

— une chambre sous atmosphère gazeuse (26) située dans le volume intérieur de la cloche autour du piston interne de celle-ci, ledit dispositif étant caractérisé en ce que la paroi de séparation (3) de la chambre haute pression (1) comprend des moyens de communication (12, 3b) reliés à la membrane semi-perméable (11) et adaptés pour amener la face active aval de ladite membrane à communiquer avec le volume intérieur de la cloche (14) de sorte que ledit volume intérieur remplisse le double rôle de chambre sous atmosphère gazeuse (26) et de moyens de recueil d'eau douce (9), la cloche (14) étant dotée de moyens (23) de retrait de l'eau douce contenue dans son volume intérieur.

2. Dispositif selon la revendication 1, caractérisé en ce que le piston interne (17) est percé intérieurement d'un canal d'admission d'eau salée (17a), ledit canal débouchant, à une extrémité, dans la chambre haute pression (1) et, à l'extrémité opposée, à l'extérieur de la paroi d'obturation (16) de la cloche, un bouchon amovible (19) étant étanchement monté à cette dernière extrémité en vue d'autoriser le remplissage de la chambre haute pression.

3. Dispositif selon la revendication 1, caractérisé en ce que le piston interne est plein, un orifice de remplissage doté d'un bouchon amovible étant prévu dans le fond de la chambre haute pression en vue d'autoriser le remplissage de ladite chambre haute pression.

4. Dispositif selon l'une des revendications 1, 2 ou 3, caractérisé en ce que la paroi de séparation (3) de la chambre haute pression délimite, du côté de la chambre sous atmosphère gazeuse, un compartiment annulaire de réception d'eau douce (9) s'ouvrant dans ladite chambre sous atmosphère gazeuse, les moyens de communication (12, 3b) précités débouchant au fond dudit compartiment (9).

5. Dispositif selon la revendication 4, caractérisé en ce que la cloche (14) est agencée de façon à pouvoir se déplacer entre deux positions extrêmes par rapport à la chambre haute pression (5) : une position dite de pénétration où la paroi d'obturation (16) vient en butée en bordure du compartiment annulaire (9), et une position dite d'extraction, où l'extrémité libre du piston (17) vient en butée par un clips (21) contre la paroi de séparation (3) du côté de la chambre haute pression.

6. Dispositif selon l'une des revendications 1, 2, 3, 4 ou 5, dans lequel la membrane semi-perméable (11) est une membrane tubulaire enroulée en spires dans la chambre haute pression (1), ledit dispositif étant caractérisé en ce que les moyens de communication précités comprennent au moins un embout tubulaire (12) disposé dans un canal (3b) traversant la paroi de séparation (3) située entre la chambre haute pression (1) et la chambre sous atmosphère gazeuse (26), ledit embout (12) étant adapté pour maintenir une extrémité (11a) de la membrane tubulaire de façon que sa face active aval constituée par sa face interne communique directement et de façon étanche avec la chambre sous atmosphère gazeuse (26).

7. Dispositif selon la revendication 6, caractérisé en ce que la membrane tubulaire (11) est enroulée autour d'une bobine ajourée (10), disposée dans la chambre haute pression (1) autour du volume de pénétration du piston (17).

8. Dispositif selon l'une des revendications 1, 2, 3, 4, 5, 6 ou 7, caractérisé en ce que les moyens de retrait de l'eau douce comprennent un bouchon amovible (23) étanchement vissé sur la cloche (14) de façon à autoriser le retrait de l'eau contenue dans celle-ci.

9. Dispositif selon l'une des revendications 1, 2, 3, 4, 5, 6, 7 ou 8, dans lequel un tube souple de purge d'air (25), est relié à la cloche (14) pour mettre la chambre sous atmosphère gazeuse (26) en communication avec la surface.

10. Dispositif selon la revendication 9, caractérisé en ce que le tube souple (25) possède une résistance adaptée pour faire office de moyens de descente ou de remontée du dispositif dans le milieu marin.

11. Dispositif selon l'une des revendications 1, 2, 3, 4, 5, 6, 7, 8, 9 ou 10, caractérisé en ce qu'il comprend deux poignées externes de manœuvre (7, 22) situées, l'une sur la paroi d'obturation (16) de la cloche, l'autre sur une paroi (4) de la chambre haute pression, située à l'opposé.

12. Dispositif selon la revendication 11, caractérisé en ce que la chambre haute pression (1) est délimitée par :

— un corps cylindrique (2) portant la paroi de séparation (3) pour former un ensemble d'un seul tenant,

— une paroi circulaire (4) clipsée de façon étanche dans le corps (2) à l'extrémité opposée de la paroi de séparation, cette paroi circulaire (4) portant du côté externe une des poignées précitées (7).

13. Dispositif selon l'une des revendications précédentes, dans lequel une membrane d'étanchéité (18) est disposée entre la cloche (14) et le corps (2) de la chambre haute pression.

## Claims

1. Device for producing sweet water from sea water, intended for immersion within the environment of the sea and of the type comprising :

— means for receiving the sweet water produced (9),

— a chamber (1), the so-called high pressure chamber, designed to contain the sea water with a view to it being processed,

— at least one selective semi-permeable membrane (11) suitable for bringing about filtration by reverse osmosis of the sea water contained in the high pressure chamber, said membrane being so designed that one of its active faces, the so-called uspstream active face, communicates with said high pressure chamber, whereas its other active face, the so-called downstream active face, communicates with the sweet water receiving means,

— a hood (14) capable of being displaced in relation to the high pressure chamber and comprising :

• on the one hand, a peripheral wall (15) capable of displacement in sealed manner along the high pressure chamber,

• on the other hand, an internal piston (17) with the useful surface (s) capable of penetrating to a variable depth into the high pressure chamber through a separation wall (3) situated between said chamber and said hood, and

• lastly, a blocking wall (16) with the useful surface (S) situated opposite the useful face (s) of the piston and subject to the pressure of the external environment, said useful surface (S) of the blocking wall being larger than said useful surface (s) of the piston,

— a chamber subject to a gaseous atmosphere (26) situated within the hood and surrounding the internal piston of the latter, said device being characterised in that separation wall (3) of high pressure chamber (1) comprises communication means (12, 3b) connected with semi-permeable membrane (11) and capable of causing the upstream active face of said membrane to communicate with the inner space of hood (14) so that said inner space fulfils the double role of chamber subject to gaseous atmosphere (26) and means for receiving sweet water (9), hood (14) being endowed with means (23) for withdrawing the sweet water contained in its inner space.

2. Device according to claim 1, characterised in that internal piston (17) is penetrated internally by a duct for the admission of salt water (17a), said duct leading, at one end, into high pressure chamber (1) and, at the opposite end, to outside blocking wall (16) of the hood, a removable plug (19) being tightly mounted at that latter end in order to enable filling of the high pressure chamber.

3. Device according to claim 1, characterised in that the internal piston is solid, a filling orifice with a removable plug being provided in the base of the high pressure chamber so as to enable filling of said high pressure chamber.

4. Device according to any of claims 1, 2 or 3, characterised in that separation walll (3) of the high pressure chamber defines, on the side of the chamber subject to a gaseous atmosphere, an annular compartment for receiving fresh water (9) opening into said chamber subject to a gaseous atmosphere, whereby said communication means (12, 3b) lead into the base of said compartment (9).

5. Device according to claim 4, characterised in that hood (14) is designed so as to be able to move between two extreme positions in relation to high pressure chamber (1), i. e. a so-called penetration position in which blocking wall (16) abuts an edge of annular compartment (9), and a so-called extraction position, in which the free end of piston (17) abuts by means of a clip (21) separation wall (3) on the side of the high pressure chamber.

6. Device according to one of claims 1, 2, 3, 4 or 5, in which the semi-permeable membrane (11) is a tubular membrane helically wound within high pressure chamber (1), said device being characterised in that said communication means comprise at least one tubular tip (12) arranged within a duct (3b) passing through separation wall (3) situated between high pressure chamber (1) and the chamber subject to a gaseous atmosphere (26), said tip (12) being so designed as to maintain one end (11a) of the tubular membrane in such a manner that its upstream active face consisting in its internal face communicates directly and in sealed fashion with the chamber subject to a gaseous atmosphere (26).

7. Devise according to claim 6, characterised in that tubular membrane (11) is wound about a perforated spool (10), located within high pressure chamber (1) about the penetration space of piston (17).

8. Device according to any of claims 1, 2, 3, 4, 5, 6 or 7, characterised in that the means of withdrawing sweet water comprise a removable plug (23) tightly screwed to hood (14) so as to enable withdrawal of the water contained in the latter.

9. Device according to any of claims 1, 2, 3, 4, 5, 6, 7 or 8, in which a flexible air venting tube (25) is connected with hood (14) in order to cause the chamber subject to a gaseous atmosphere (26) to communicate with the surface.

10. Device according to claim 9, characterised in that flexible tube (25) has adequate strength to serve as a means for lowering or raising the device within the environment of the sea.

11. Device according to any of claims 1, 2, 3, 4, 5, 6, 7, 8, 9 or 10, characterised in that it comprises two external actuating handles (7, 22), one of which is situated on blocking wall (16) of the hood, while the other is on a wall (4) of the high pressure chamber, located opposite.

12. Device according to claim 11, characterised in that high pressure chamber (1) is bounded by :
— a cylindrical body (2) bearing separation wall (3) so as to form an integral unit,
— a circular wall (4) secured tightly by means of a clip within body (2) at the end opposite the separation wall, said circular wall (4) having on its outside one of said handles (7).

13. Device according to any of the preceding claims, in which a sealing membrane (18) is located between hood (14) and body (2) of the high pressure chamber.

**Patentansprüche**

1. In die Meeresumwelt unterzutauchende Vorrichtung zur Meereswasserentsalzung der Art mit :
— einem Mittel zum Sammeln des erzeugten Süßwassers (9),
— einer als Behälter für das zu behandelnde Meerwasser dienenden Kammer (1), der sogenannten Hochdruckkammer,
— mindestens einer selektiven halbpermeablen Membran (11), die so beschaffen ist, daß sie Filterung des in der Hochdruckkammer enthaltenen Meerwassers durch Umkehrosmose bedingt, und zwar ist die besagte Membran so beschaffen, daß eine ihrer aktiven Oberflächen, die sogenannte stromaufwärts befindliche aktive Oberfläche, mit der besagten Hochdruckkammer in Verbindung steht, während ihre andere aktive Oberfläche, die sogenannte stromabwärts befindliche aktive Oberfläche, mit dem Mittel zum Sammeln des Süßwassers in Verbindung steht,
— einer im Verhältnis zu der Hochdruckkammer beweglichen Haube (14), mit :
• einerseits einer peripheren Wand (15), die so beschaffen ist, daß sie sich auf abgedichtete Weise entlang der Hochdruckkammer verschieben läßt,
• andererseits einem Innenkolben (17) mit einer nutzbaren Oberfläche (s), der in der Lage ist, bis zu einer veränderlichen Tiefe durch eine Trennwand (3) zwischen der besagten Kammer und der besagten Haube hindurch in die Hochdruckkammer einzudringen,
• schließlich einer Blockierwand (16) mit einer nutzbaren Oberfläche (S), die sich gegenüber der nutzbaren Oberfläche (s) des Kolbens befindet und unter dem Druck der äußeren Umwelt steht, wobei die besagte nutzbare Oberfläche (S) der Blockierwand größer ist als die besagte nutzbare Oberfläche (s) des Kolbens,
— einer unter gasförmiger Atmosphäre stehenden Kammer (26), die sich in dem Innenraum der Haube rings um deren Innenkolben befindet, wobei die besagte Vorrichtung dadurch gekennzeichnet ist, daß die Trennwand (3) der Hochdruckkammer (1) Kommunikationsmittel (12, 3b) umfaßt, die an die halbpermeable Membran (11) anschließen und so beschaffen sind, daß die stromaufwärts befindliche aktive Oberfläche der besagten Membran mit dem Innenraum der Haube (14) in Verbindung gesetzt wird, so daß der besagte Innenraum die doppelte Rolle einer unter gasförmiger Atmosphäre stehenden Kammer (26) und eines Mittels zum Sammeln von Süßwasser (9) erfüllt, wobei die besagte Haube (14) mit einem Mittel (23) zum Abziehen des in ihrem Innenraum enthaltenen Süßwassers ausgestattet ist.

2. Vorrichtung nach Anspruch 1, dadurch gekennzeichnet, daß durch den Innenkolben (17) ein Salzwassereinlaufkanal (17a) verläuft, wobei der besagte Kanal an einem Ende in die Hochdruckkammer (1) und am gegenüberliegenden Ende außerhalb der Blockierwand (16) der Haube mündet, wobei an besagtem letzteren Ende ein abnehmbarer Stopfen (19) dicht angebracht ist, um das Füllen der Hochdruckkammer zu ermöglichen.

3. Vorrichtung nach Anspruch 1, dadurch gekennzeichnet, daß der Innenkolben massiv ist, wobei im Boden der Hochdruckkammer eine mit einem entfernbaren Stopfen versehene Einfüllöffnung vorgesehen ist, um das Füllen der besagten Hochdruckkammer zu ermöglichen.

4. Vorrichtung nach einem der Ansprüche 1, 2 oder 3, dadurch gekennzeichnet, daß die Trennwand (3) der Hochdruckkammer an der Seite der unter gasförmiger Atmosphäre stehenden Kammer einen Ringraum zur Aufnahme von Süßwasser (9) begrenzt, der sich in die besagte unter gasförmiger Atmosphäre stehende Kammer öffnet, wobei die besagten Kommunikationsmittel (12, 3b) in den Boden des besagten Raumes (9) münden.

5. Vorrichtung nach Anspruch 4, dadurch gekennzeichnet, daß die Haube (14) so beschaffen ist, daß sie sich im Verhältnis zu der Hochdruckkammer (1) zwischen zwei Endlagen verschieben läßt, und zwar einer sogenannten Eindringlage, in der die Blockierwand (16) an den Rand des Ringraums (9) anschließt, und einer sogenannten Extraktionslage, in der das freie Ende des Kolbens (17) über eine Klemme (21) an die Trennwand (3) auf der Seite der Hochdruckkammer anschließt.

6. Vorrichtung nach einem der Ansprüche 1, 2, 3, 4 oder 5, bei der die halbpermeable Membran (11) eine rohrförmige, spiralförmig gewickelte Membran in der Hochdruckkammer (1) ist, wobei die besagte Vorrichtung dadurch gekennzeichnet ist, daß die besagten Kommunikationsmittel mindestens ein rohrförmiges Ende (12) innerhalb eines Kanals (3b) umfassen, der durch die zwischen den Hochdruckkammer (1) und der unter gasförmiger Atmosphäre stehenden Kammer (26) befindliche Trennwand (3) hindurchführt, wobei das besagte Ende (12) so beschaffen ist, daß es ein Ende (11a) der rohrförmigen Membran so hält, daß deren stromabwärts befindliche aktive Oberfläche, die durch ihre innere Oberfläche gebildet wird, unmittelbar und in abgedichteter Weise mit der unter gasförmiger Atmosphäre stehenden Kammer (26) in Verbindung steht.

7. Vorrichtung nach Anspruch 6, dadurch gekennzeichnet, daß die rohrförmige Membran (11) um eine durchlochte Spule (10) gewickelt ist, wobei sich die besagte Spule in Hochdruckkammer (1) rings um den Eindringraum des Kolbens (17) befindet.

8. Vorrichtung nach einem der Ansprüche 1, 2, 3, 4, 5, 6 oder 7, dadurch gekennzeichnet, daß die Mittel zum Abziehen von Süßwasser einen entfernbaren Stopfen (23) umfassen, der dicht an die Haube (14) angeschraubt ist, so daß das Abziehen des darin enthaltenen Wassers ermöglicht wird.

9. Vorrichtung nach einem der Ansprüche 1, 2, 3, 4, 5, 6, 7 oder 8, bei der ein Entlüftungsschlauch (25) an die Haube (14) anschließt, um die unter gasförmiger Atmosphäre stehende Kammer (26) mit der Oberfläche in Verbindung zu setzen.

10. Vorrichtung nach Anspruch 9, dadurch gekennzeichnet, daß Schlauch (25) ausreichende Festigkeit besitzt, um als Mittel zum Senken bzw. Anheben der Vorrichtung innerhalb der Meeresumwelt zu dienen.

11. Vorrichtung nach einem der Ansprüche 1, 2, 3, 4, 5, 6, 7, 8, 9 oder 10, dadurch gekennzeichnet, daß sie zwei äußere Bedienungsgriffe (7, 22) umfaßt, von denen der eine an der Blockierwand (16) der Haube und der andere an einer gegenüberliegenden Wand (4) der Hochdruckkammer angeordnet ist.

12. Vorrichtung nach Anspruch 11, dadurch gekennzeichnet, daß die Hochdruckkammer begrenzt ist durch

— einen zylindrischen Körper (2) mit der Trennwand (3), die gemeinsam eine integrierende Einheit bilden,

— eine kreisförmige Wand (4), die auf dichte Weise mit Hilfe einer Klemme in dem Körper (2) an dem der Trennwand gegenüberliegenden Ende befestigt ist, wobei die besagte kreisförmige Wand (4) an der Außenseite mit einem der besagten Griffe (7) versehen ist.

13. Vorrichtung nach einem der vorstehenden Ansprüche, bei der eine Abdichtmembran (18) zwischen der Haube (14) und dem Körper (2) der Hochdruckkammer vorgesehen ist.

Fig. 1

Fig. 3

Fig. 2